# EUROPEAN PATENT SPECIFICATION

(11) **EP 3 891 540 B1**
(45) Date of publication and mention of the grant of the patent: **30.10.2024**
(21) Application number: 19816623.3
(22) Date of filing: 03.12.2019
(51) Int. Cl.: G02B 6/44

(54) **TELECOMMUNICATIONS PANEL**
TELEKOMMUNIKATIONSTAFEL
PANNEAU DE TÉLÉCOMMUNICATIONS

(30) Priority: 04.12.2018 US 201862775170 P
(43) Date of publication of application: 13.10.2021
(73) Proprietor: CommScope Connectivity Belgium BVBA, 3010 Kessel-Lo (BE)
(72) Inventor: KEUSTERMANS, Eric Marcel M., Hickory, North Carolina 28602 (US); BLEUS, Heidi, Hickory, North Carolina 28602 (US)
(74) Representative: Murgitroyd & Company
(86) International application number: PCT/EP2019/083550
(87) International publication number: WO 2020/115074

(56) References cited:
- EP-A1- 3 032 304
- WO-A2-2014/122104
- US-A- 5 323 480
- US-A- 5 717 811

## Description

### CROSS-REFERENCE TO RELATED APPLICATION

This application claims the benefit of U.S. Patent Application Serial No. 62/775,170, filed on December 4, 2018.

### FIELD OF THE INVENTION

The present invention relates to telecommunications panels, trays, and related cable management structures.

### BACKGROUND

Numerous telecommunications panels exist today and are used in various equipment applications. Conventional telecommunications panels include hinges that are designed to allow a tray to be rotated out of the telecommunications panel. By rotating the tray out of the telecommunications panel, access is provided to rear portions of a termination field. Such trays may include cable management structures that aid in organizing and managing telecommunications cables routed to and away from the telecommunications panel. US5323480 relates a pivotable and removable cable management tray comprsing openings for entering and exiting optical fibers, as well as retention structures and a storage area.

EP3032304 discloses a pre-cabled telecommunication assembly.

### SUMMARY

Aspects of the present invention are set out in the appended claims. In one aspect the claimed invention provides

a basket for a telecommunications tray in accordance with claim 1. In another aspect the claimed invention provides a pre-cabled telecommunications tray in accordance with claim 7.

### BRIEF DESCRIPTION OF THE DRAWINGS

The accompanying drawings, which are incorporated in and constitute a part of the description, illustrate several aspects of the present disclosure. A brief description of the drawings is as follows:
Figure 1 is a perspective view of a telecommunications panel including a multi-positionable tray assembly in accordance with principles of the present disclosure.
Figure 2 is a top view of the telecommunications panel of Figure 1.
Figure 3 is a perspective view of the telecommunications panel shown in Figure 1, with a top panel portion shown transparent for purposed of clarity.
Figure 4 is a top view of the telecommunications panel shown in Figure 2.
Figure 5 is a perspective view of the multi-positionable tray assembly removed from the telecommunications panel shown in Figure 1.
Figure 6 is a top view of the multi-positionable tray shown in Figure 5.
Figure 7 is a perspective view of the multi-positionable tray assembly shown in Figure 5, with a cable management basket removed.
Figure 8 is a top view of the multi-positionable tray shown in Figure 7.
Figure 9 is a perspective view of a cable management basket of the multi-positionable tray assembly shown in Figure 5.
Figure 10 is a perspective view of the cable management basket shown in Figure 9 with separable cable retention structures removed.
Figure 11 is a top view of the cable management basket shown in Figure 10.
Figure 12 is a bottom view of the cable management basket shown in Figure 10.
Figure 13 is a front view of the cable management basket shown in Figure 10.
Figure 14 is a back view of the cable management basket shown in Figure 10.
Figure 15 is a first side view of the cable management basket shown in Figure 10.
Figure 16 is a second side view of the cable management basket shown in Figure 10.
Figure 17 is a perspective view of a cable management structure of the cable management basket shown in Figure 9.
Figure 18 is a top view of the cable management structure shown in Figure 17.
Figure 19 is a first side view of the cable management structure shown in Figure 17.
Figure 20 is a second side view of the cable management structure shown in Figure 17.
Figure 21 is a perspective view of a tube holder attachable to the cable management basket shown in Figure 9.
Figure 22 is a perspective view of a repair station block attachable to the cable management basket shown in Figure 9.
Figure 23 is a perspective view of the telecommunications panel shown in Figure 1 with cables routed through the telecommunications panel.

### DETAILED DESCRIPTION

Reference will now be made in detail to exemplary aspects of the present disclosure that are illustrated in the accompanying drawings. Whenever possible, the same reference numbers will be used throughout the drawings to refer to the same or similar parts.

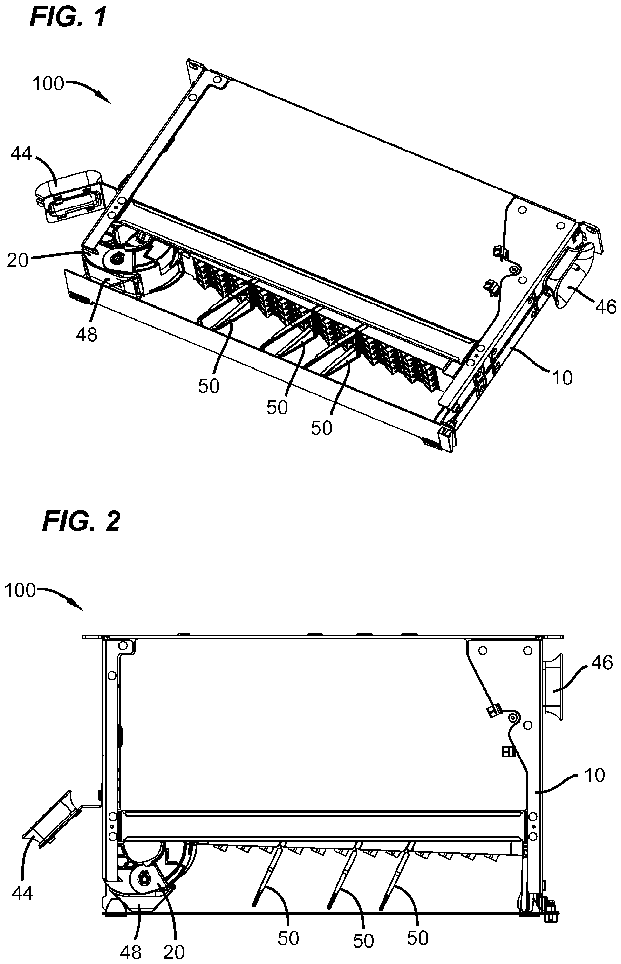

Referring now to Figures 1 and 2, a telecommunications panel 100 (e.g., an enclosure, an optical distribution frame, etc.) is illustrated according to the principles of the present disclosure. The telecommunications panel 100 may be included in a cabinet (not shown). The telecommunications panel 100 and/or the cabinet may be used for various purposes in telecommunications systems. For example, housing a cable management arrangement including, for example, a cable management basket and a patch panel. In one aspect, patch cords (i.e., patch cables, connectorized fiber optic cables, etc.) may enter the telecommunications panel 100 and/or the cabinet and be interconnected at a patch panel which may include a plurality of fiber optic adapters. Fiber optic connectors that terminate ends of the patch cords may connect with the fiber optic adapters of the patch panel. The interconnections at the patch panel may be rearranged from time-to-time, as desired, for changing configurations of the telecommunications system. The telecommunications panel 100 may further hold various other telecommunications components. An exemplary telecommunications system 1 is shown and described in Patent Cooperation Treaty (PCT) publication number WO 2016/042018, filed on September 16, 2015, the entirety of which is incorporated by reference herein.

Referring to Figures 1 to 4, the telecommunications panel 100 may include a chassis 10 to which one or more multi-positionable tray assemblies 20 are removably attached. In the example shown, a single tray assembly 20 is attached to the chassis 10. However, the chassis 10 may be configured to hold multiple tray assemblies 20, for example, three or more tray assemblies 20, as shown and described in the WO '018 publication. In one aspect, the chassis 10 can be configured to support other components of the telecommunications panel 100, as desired. For example, the chassis 10 can be configured to support cable management structures 44 and 46. In the embodiment shown, cable management structure 44 is configured to guide patch cords extending from the tray assembly 20. The cable management structure 46 is configured to allow one or more cables to enter the chassis 10 and tray 20. The tray 20 may also be configured to support various cable management structures. For example, cable management structures 48 and 50 may be provided to guide patch cords towards cable management structure 44.

In one aspect, the telecommunications panel 100 further includes a patch panel 104 including a plurality of fiber optic adapters 108 supported by a patch panel frame 106. As shown, the fiber optic adapters 108 are LC-type adapters. However, other types of adapters may be provided, for example, SC-type adapters. The fiber optic adapters 108 are configured to receive fiber optic connectors on each side of the patch panel 104.

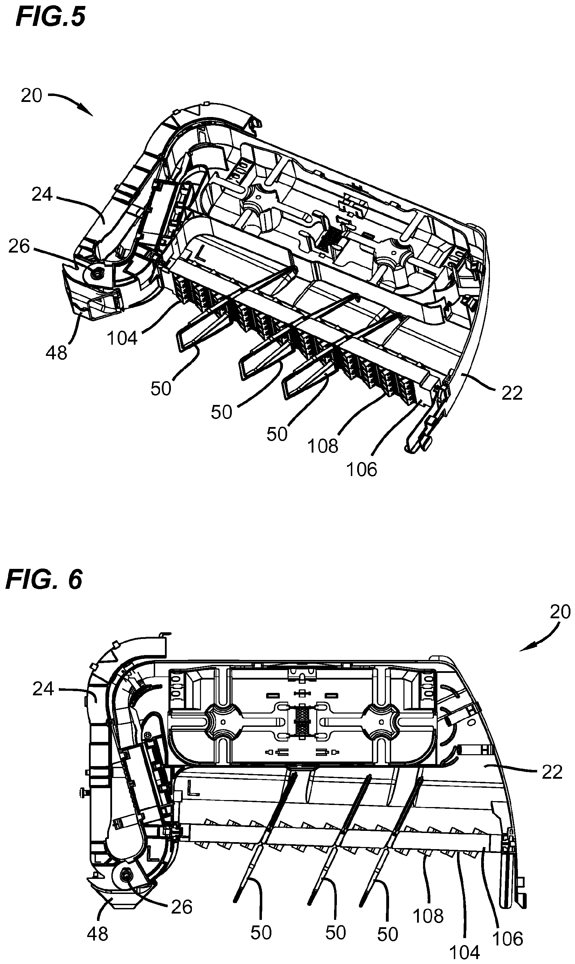

Referring to Figures 5 to 8, the multi-positionable tray assembly 20 can include a tray 22 (e.g., a sub-rack) and a support arm 24 that are pivotally connected to each other via a pivot joint 26 that allows the tray assembly 20 to be moved between a folded position and an access position. The pivot joint 26 is formed by the interface between an upper joint arm of the support arm 24 and an upper joint extension of the tray 22 and by the interface between a lower joint arm of the support arm 24 and a lower joint extension of the tray 22. The interfaces can be secured together by a variety of means, for example, a snap-fit type connection via protrusions and corresponding recesses or by a connection utilizing fasteners. As depicted, the pivot joint 26 represents the connection between the tray 22 and the support arm 24 to the chassis 10 and defines a vertical hinge with an axis for the multi-positionable tray assembly 20. Although the pivot joint 26 and support arm 24 are shown as being provided on the left-hand side of the tray 22 (as viewed at Figure 6, for example) to result in a left-hand swinging tray, the tray 22 may be configured such that the pivot joint 26 and support arm 24 are provided on the right-hand side of the tray 22 to result in a right-hand swinging tray 22.

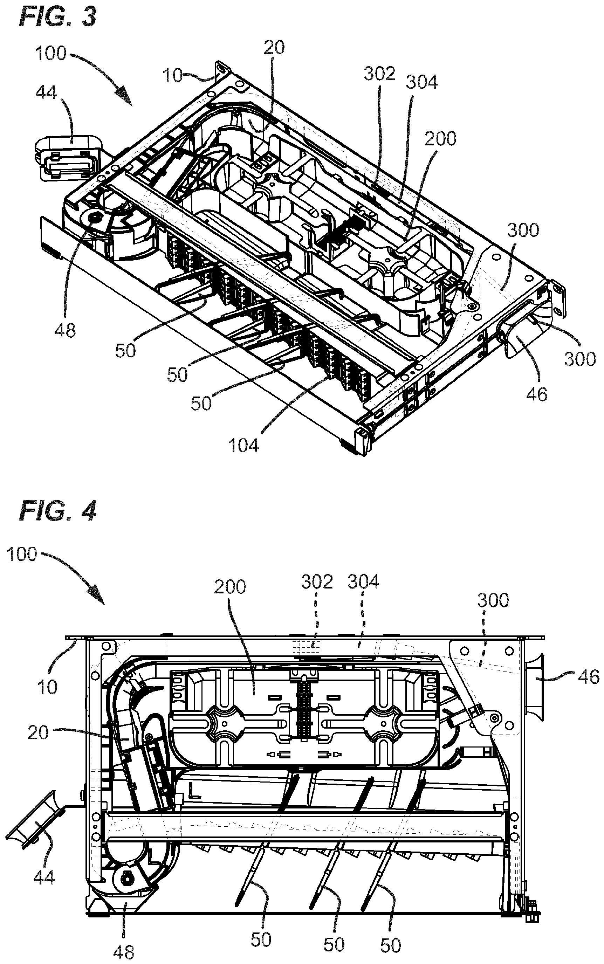

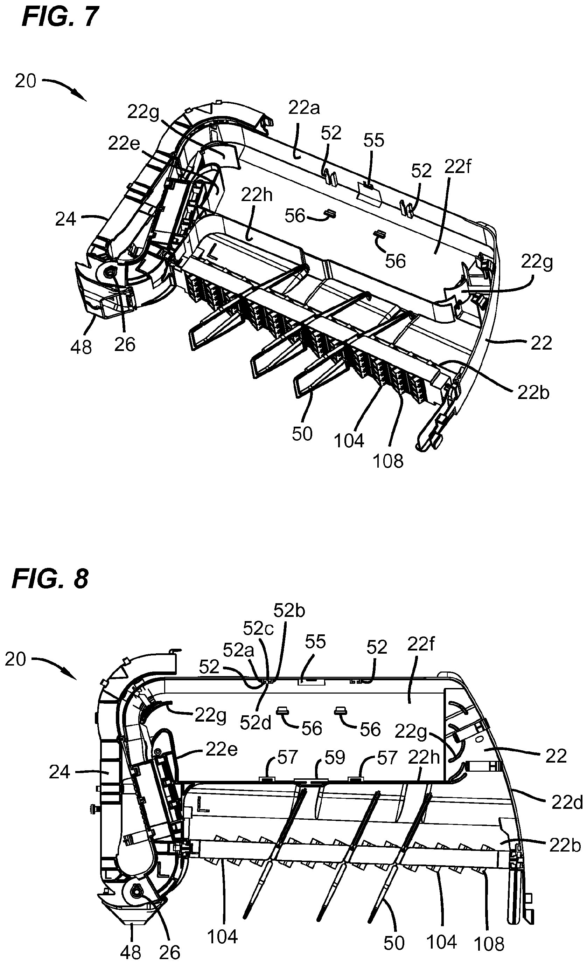

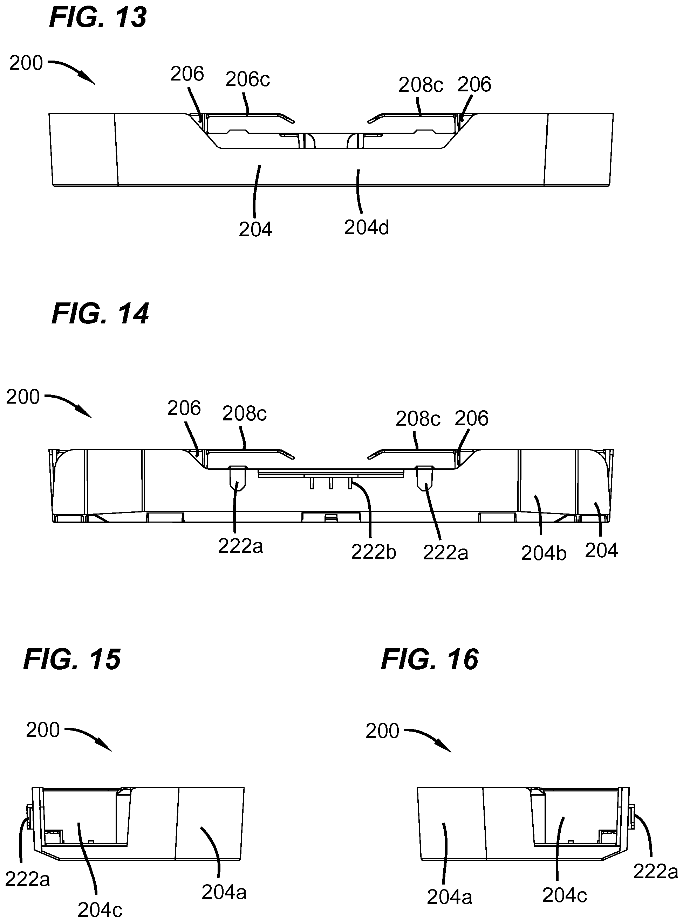

Referring to Figures 7 and 8, it can be seen that the tray 22 is configured with multiple attachment feature arrangements 50 which enables the tray 22 to accept various types of telecommunications components, for example the cable management basket 200 shown at Figures 3 to 6 and 9 to 16. In one aspect, the tray 22 includes a rear sidewall 22a, a front sidewall 22b, a second sidewall 22d, an interior wall structure 22e, and a bottom wall 22f. Various cable guide structures 22g extending from the bottom wall 22f are also shown as being provided.

In the example presented, various attachment features are provided such that the cable management basket 200 can be removably secured to the tray 22. For example, a pair of spaced attachment features 52 is provided at the rear sidewall 22a of the tray 22. An attachment feature 55 is also provided at the rear sidewall 22a and between the attachment features 52. Another pair of attachment features 56 is provided on the bottom wall 422h. Attachment features can also be provided at a front sidewall 22h. For example, a pair of attachment features 57 can be provided, each of which is similarly configured to the attachment feature 55. Yet another attachment feature 59 can be provided and is shown as being located between the attachment features 457. Attachment features 52, 55, 56, 57, and 59 are further shown and described in the WO '018 publication.

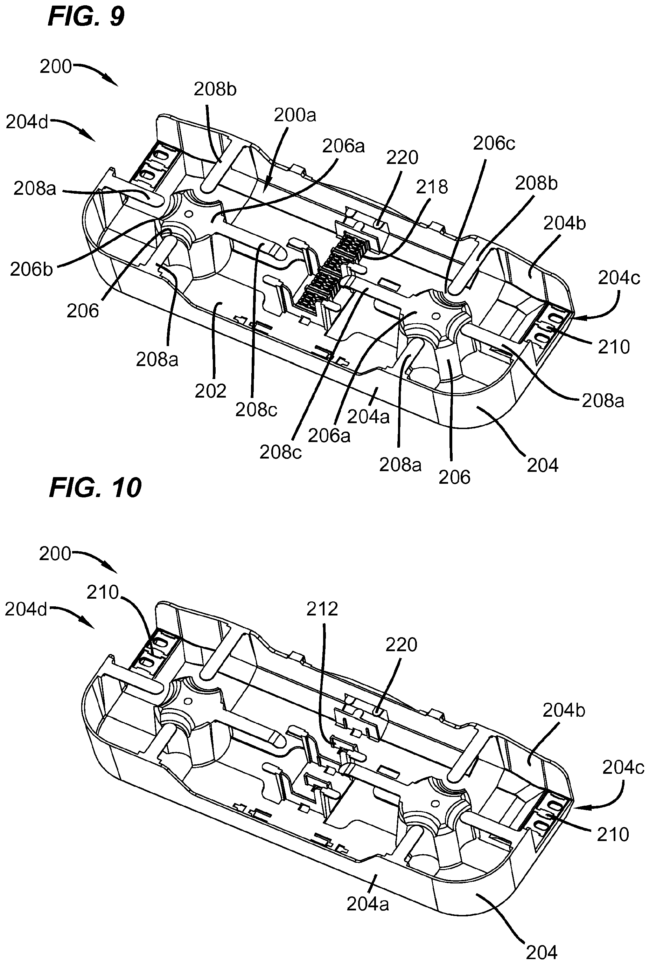

Referring to Figures 9 to 16, the cable management basket 200 is shown in further detail. In one aspect, the cable management basket 200 includes a bottom wall 202 and an outer perimeter wall 204 extending from the bottom wall 202. Together, the bottom wall 202 and the outer perimeter wall 204 define an interior volume 200a of the cable management basket 200. In one aspect, the outer perimeter wall 204 is formed by a front wall portion 204a and a back wall portion 204b with openings 204c, 204d therebetween. The openings 204c, 204d provide an access pathway for cables entering and exiting the interior volume 200a of the cable management basket 200.

The cable management basket 200 is further shown as including a pair of hubs 206 extending from the bottom wall 202. The hubs 206 provide a location about which the excess length of cables within the basket 200 can be wrapped. To retain the wrapped cables about the hubs 206 and within the interior volume 200a, arms or tines 208 can be provided near distal ends 206a of the hubs 206. In the example shown, four tines 208 are provided at each hub, with two tines 208a extending from the top of the front wall portion 204a, one tine 208b extending from the top of the back wall portion 204b, and a single tine 208c extending from the distal end 206a of the hub 206. At the location of the distal ends of tines 208a, 208b, the hubs 206 can be provided with recessed or scalloped regions 206b such that a gap 206c is provided between the tines 208a, 208b and the hubs 206. The gap 206c allows for the cables to be installed and removed during wrapping and unwrapping about the hubs 206. In the example shown, the hubs 206 and tines 208 are shown as being integrally formed with the cable management basket 200 bottom wall 202 and outer perimeter wall 204.

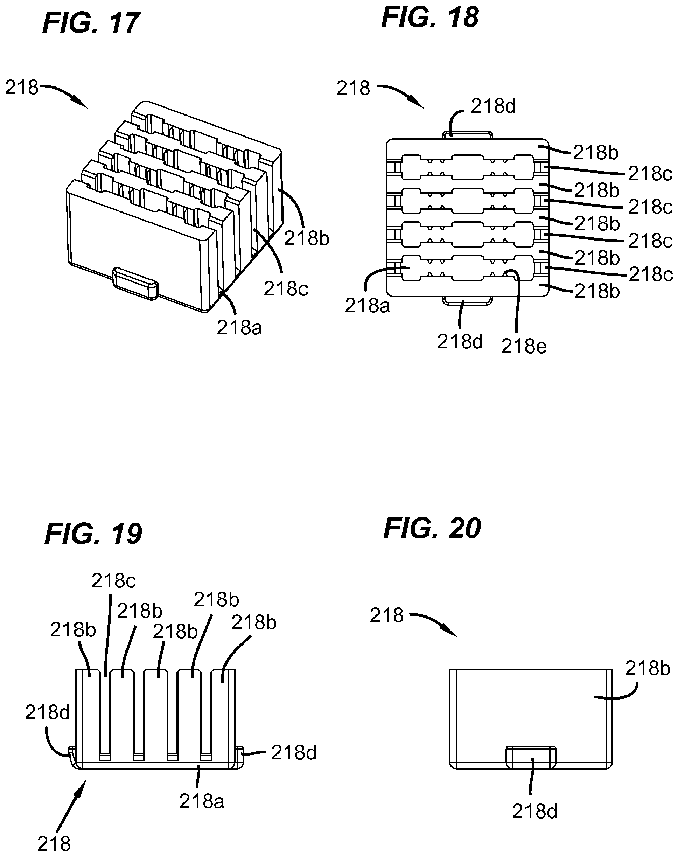

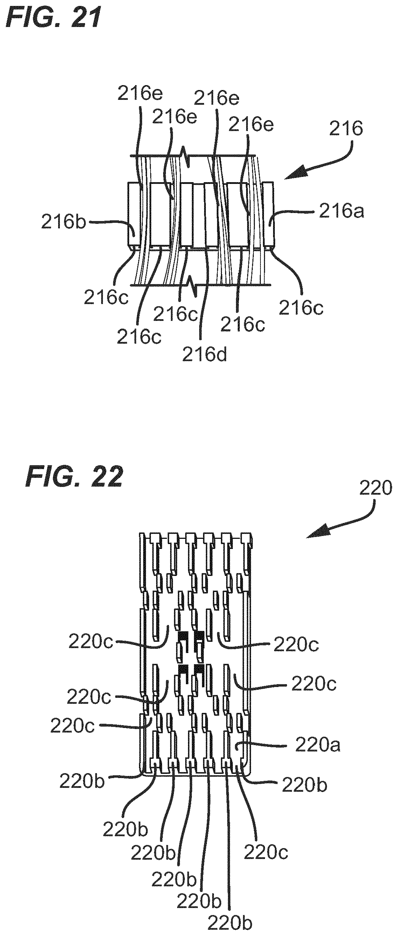

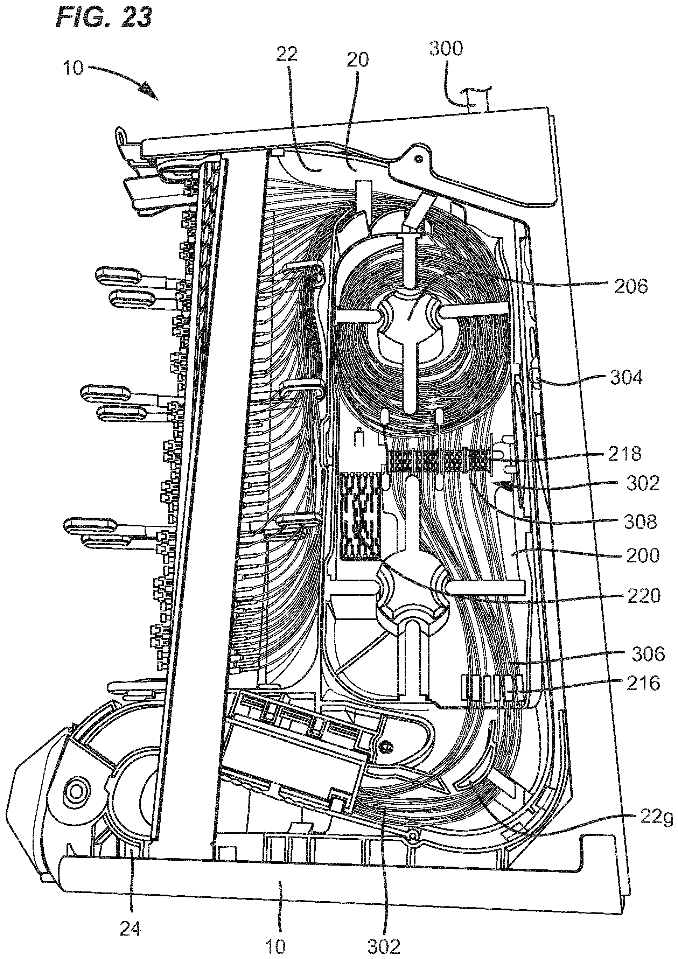

In one aspect, the cable management basket 200 is provided with various structures for retaining cable organization components within the interior volume 200a. For example, a retention structure 210 is provided on the bottom wall 202 adjacent each opening 204c, 204d. The retention structures 210 provide a location for a snap-fit type connection with tube holders 216, which can be provided as part of the cable assembly entering the openings 204c, 204d. An example tube holder 216 is shown at Figure 21 and installed within the tray at Figure 23. The tube holder 216 may be characterized as a cable retention structure. Retention structures 212 can also be provided extending from the bottom wall between the hubs 206. Retention structures 212 provide a location for a snap-fit type connection with cable retention blocks 218. The cable retention blocks 218 may be characterized as a cable retention structures. As is explained in further detail later, the cable retention blocks 218 are for organizing individual fiber cables extending from the larger cables retained by the tube holder 216. An example cable retention block 218 is shown at Figures 17 to 20. Four cable retention blocks 218 are shown as being installed within the tray at Figures 9 and 23. More or fewer retention structures 212 and cable retention blocks 218 may be provided. A third retention structure 214 is also shown as being provided at the bottom wall 202 adjacent the front wall portion 204a. The retention structure 214 is for providing a snap-fit type connection with a repair station block 220. The repair station block 220 is provided such that individual fiber optic cables retained within the cable management basket interior volume 200a can be retained and repaired in situ. A transition area with cable retention members 220 can also be provided adjacent the retention structure 212 to facilitate cable repair. An example repair station block 220 is shown at Figure 22 and installed within the tray at Figure 23. In the example shown, the retention structures 210, 212, 214 and the cable retention members 220 are integrally formed with the cable management basket 200 bottom wall 202 and/or perimeter wall 204.

The cable management basket 200 is further shown as being provided with attachment features 222 for enabling the basket 200 to be secured to the tray 20. For example, the basket 200 is provided with attachment features 222a and 222b for connecting to the attachment features 52 and 55 and is provided with attachment features 222c, configured as apertures, for connecting to attachment features 56 on the tray 20. The basket 200 can also be configure to connect to the attachment features 57 and 59.

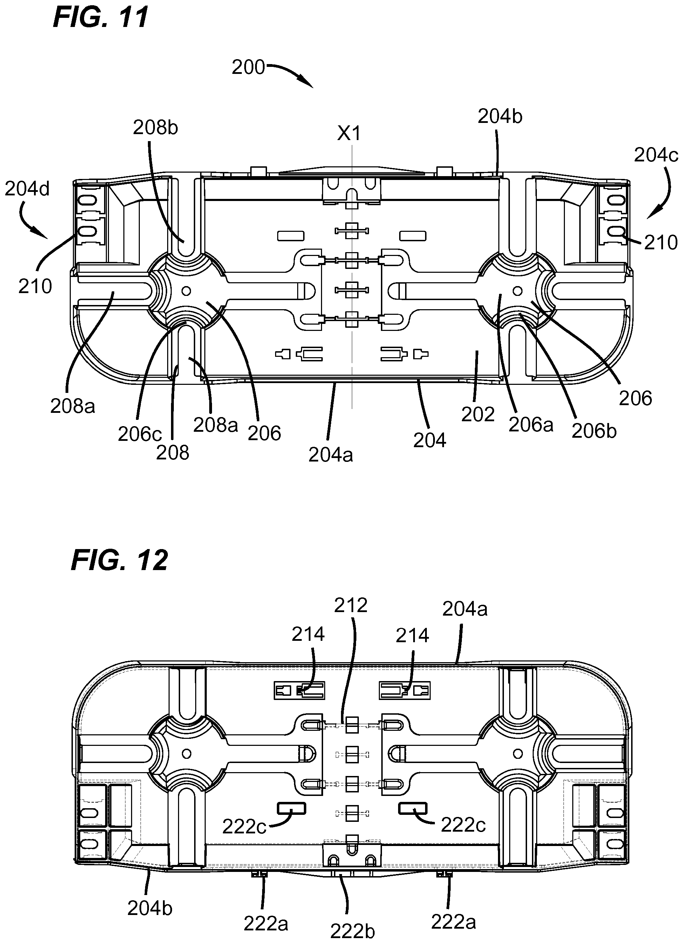

In the example shown, the cable management basket 200 is symmetrical about a transverse centerline axis X1 (see Figure 11). By configuring the cable management basket 200 with such symmetry, the tray 20 can be configured for either a right-hand swing or left-hand swing without requiring a differently configured cable management basket 200. Accordingly, the disclosed example is advantageous in that the number of unique components required for various configurations is reduced.

Referring to Figures 17 to 20, a cable retention block 218 is shown in isolation. As shown, the cable retention block 218 is unitarily formed with a bottom wall 218a from which a plurality of sidewall extensions 218b extend to define a plurality of interior channels 218c. The retention block 218 is also shown as including a pair of protrusions 218d which engage with the retention structures 212 such that the retention blocks 218 can be retained in with snap-fit type connection. As most easily viewed, each of the sidewall extensions 218b is provided with a plurality of vertically extending barbs or ribs 218e for aiding in retaining cables within the interior channels 218c.

Referring to Figure 21, a tube holder 216 is shown in isolation. As shown, the tube holder 216 is configured as two separate members 216a, 216b with each including a plurality of sidewalls 216c extending from a base wall 216d to define a pair of channels 216e. As shown, the sidewalls 216c extend horizontally across the channels 216e such that a narrowed passageway is defined to better retain the cables within the channels 216e. Other configurations are possible. For example, the tube holder 216 could be provided as a single component with more or fewer channels 216e.

Referring to Figure 22, a repair station block 220 is shown in isolation. As shown, the repair station block 220 includes a base wall 220a from which a plurality of sidewalls 220b extend to define a plurality of channels 220c for retaining an individual cable during a repair operation.

Referring to Figure 23, a pre-cabled telecommunications panel 100 utilizing the above-described components is presented. It is noted that the example shown in Figure 23 is configured with a right-hand swinging tray 20 in contrast to the example shown at Figures 1 to 8. As shown, a trunk cable 300 including a plurality of jacketed fiber optic cables 302 enters the telecommunications panel 100 at a rear side of the panel, for example via cable management structure 46. The trunk cable 300 extends along the rear side of the chassis 10 adjacent the tray rear wall 22a to a distribution component 304 that is mounted to the chassis 10. With the distribution component 304, an outer jacket of the trunk cable 300 is removed to expose the individual fiber optic cables 302 which exit the distribution component 304 at an opposite end. The distribution component 304 can include a lacing structure to organize the fiber optic cables 302. The distribution component 304 secures the trunk cable 300 and each of the fiber optic cables 302 and provides a strain-relief function against tensile forces exerted on the trunk cable 300 from being exerted onto the fiber optic cables 302. In one example, this function is accomplished by securing a strength member of the trunk cable 300 to an anchor point within the distribution component 304.

From the distribution component 304, the fiber optic cables 302 continue to extend along a cable routing pathway defined along the back side 22a of the tray 22 and the support arm 24. As the cables exit the support arm, the cables are routed about the cable routing structure 22g (i.e. bend radius limiter) and into the cable management basket 200 via opening 204c. After entering into the basket 200, the cables 302 are bundled and secured by the tube holders 216. At a location between the tube holders 216 and the cable retention blocks 218, the outer jackets of the fiber optic cables 302 are removed to expose a plurality of optical fibers 306. In the example shown, the optical fibers 306 have a nominal diameter of about 250µ. The optical fibers 306 are then provided with color-coded overtubing 308 having a nominal diameter of about 900µ. The optical fibers 306 and overtubing 308 are then organized and secured by the cable retention blocks 218. The optical fibers 306 and overtubing 308 then exit the opening 204d are are routed individually to the adapters 108 with the excess cable lengths being wrapped around hub 206. Where a left-hand swinging tray 20 is provided, the optical fibers 306 and overtubing 308 would be wrapped around the opposite hub 206 with the fiber optic cables 302 entering the opening 204d of the basket 200. With the disclosed configuration, a telecommunications panel 10 can be entirely cabled within a factory setting with a predetermined length of trunk cable 300 and then shipped for later installation. This approach allows for cabling within the panel 10 to be installed in a much more controlled setting, therefore increasing the quality of the installation and greatly reducing field installation time, particularly since the disclosed panel 10 eliminates the need for field splicing.

In the examples disclosed, the cable management basket 200 is unitarily formed from a polymeric material. Other materials and configurations are possible. For example, the basket 200 could be formed from a metal material and/or with separately formed components that are assembled together to form the basket 200.

## Claims

1. A basket (200) for a telecommunications tray, the basket comprising:
a) a bottom wall (202);
b) a sidewall (204) extending from the bottom wall, the sidewall (204) and bottom wall (202) defining an interior volume (200a), the sidewall (204) including a first opening (204c) for allowing optical fibers to enter the interior volume (200a) and a second opening (204d) for allowing optical fibers to exit the interior volume (200a);
c) a first cable retention structure (210) proximate the first opening (204c), the first cable retention structure being for retaining a plurality of optical fiber cables having a first nominal diameter;
d) a second cable retention structure (212) for retaining the plurality of optical fiber cables housed in overtubing, the overtubing having a second nominal diameter larger than the first nominal diameter; and
e) a first cable storage area (206) located proximate the second opening;
f) wherein the second cable retention structure is located between the first cable retention structure and the first cable storage area.

2. The basket of claim 1, further comprising:
a) a second cable storage area (206) located proximate the first opening.

3. The basket of claim 1 or 2, wherein at least one of the first and second storage areas is located between the first and second cable retention structures.

4. The basket of claim 1, further including a third retention structure mounted to the bottom wall, the third retention structure (220) being for retaining one or more of the plurality of optical fiber cables during a repair operation.

5. The basket of claim 1, wherein the basket is formed from a polymeric material.

6. The basket of claim 1, wherein the basket is symmetrical about a transverse axis.

7. A pre-cabled telecommunications tray comprising:
a) a chassis (10);
b) a tray (20) pivotably mounted to the chassis, the tray including at least one cable management feature (50);
c) a plurality of fiber optic adapters (108) operably mounted to the tray;
d) the basket (200) of any of claims 1 to 6 mounted to the tray;
e) a telecommunications trunk cable (300) including a plurality of optical fiber cables (302) retained by an outer jacket, wherein an end segment of the telecommunications cable extends into the tray and basket, wherein fiber optic cables of the trunk cable are secured within the basket at the first cable retention structure (210), wherein loose optical fibers (306) of the fiber optic cables are provided with overtubing and secured at the second retention structure (212),
wherein at least some of the loose optical fibers are operably connected to the plurality of fiber optic adapters.

8. The pre-cabled telecommunications tray of claim 7, wherein the first cable storage area is a spool about which the optical fibers and overtubing are wrapped.

9. The pre-cabled telecommunications tray of claim 7, further including a third retention structure (220) located within the cable management basket, the third retention structure being for retaining one or more of the plurality of optical fiber cables during a repair operation.

10. The pre-cabled telecommunications tray of claim 7, wherein the cable management basket is formed from a polymeric material.

11. The pre-cabled telecommunications tray of claim 7, wherein the cable management basket is symmetrical about a transverse axis.

12. The pre-cabled telecommunications tray of claim 1, wherein the first opening is opposite the second opening.

## Patentansprüche

1. Gehäuse (200) für einen Telekommunikationseinsatz, das Gehäuse umfassend:
a) eine Bodenwand (202);
b) eine Seitenwand (204), die sich von der Bodenwand erstreckt, wobei die Seitenwand (204) und die Bodenwand (202) ein Innenvolumen (200a) definieren, wobei die Seitenwand (204) eine erste Öffnung (204c), zum Ermöglichen des Eintritts von Glasfasern in das Innenvolumen (200a) und eine zweite Öffnung (204d) zum Ermöglichen des Austritts von Glasfasern aus dem Innenvolumen (200a) beinhaltet;
c) eine erste Kabelhaltestruktur (210) in der Nähe der ersten Öffnung (204c), wobei die erste Kabelhaltestruktur zum Halten einer Vielzahl von Glasfaserkabeln mit einem ersten Nenndurchmesser dient;
d) eine zweite Kabelhaltestruktur (212) zum Halten der Vielzahl von in einem Übermantel untergebrachten Glasfaserkabeln, wobei der Übermantel einen zweiten Nenndurchmesser aufweist, der größer ist als der erste Nenndurchmesser; und
e) einen ersten Kabelaufbewahrungsbereich (206), der sich in der Nähe der zweiten Öffnung befindet;
f) wobei die zweite Kabelhaltestruktur zwischen der ersten Kabelhaltestruktur und dem ersten Kabelaufbewahrungsbereich angeordnet ist.

2. Gehäuse nach Anspruch 1, ferner umfassend:
a) einen zweiten Kabelaufbewahrungsbereich (206), der sich in der Nähe der ersten Öffnung befindet.

3. Gehäuse nach Anspruch 1 oder 2, wobei zumindest einer der ersten und zweiten Aufbewahrungsbereiche zwischen der ersten und zweiten Kabelhaltestruktur angeordnet ist.

4. Gehäuse nach Anspruch 1, ferner beinhaltend eine dritte Haltestruktur, die an der Bodenwand montiert ist, wobei die dritte Haltestruktur (220) zum Halten eines oder mehrerer der Vielzahl von Glasfaserkabeln während eines Reparaturvorgangs dient.

5. Gehäuse nach Anspruch 1, wobei das Gehäuse aus einem Polymermaterial gebildet ist.

6. Gehäuse nach Anspruch 1, wobei das Gehäuse um eine Querachse symmetrisch ist.

7. Vorverkabelter Telekommunikationseinsatz, umfassend:
a) ein Chassis (10);
b) einen schwenkbar (20) an dem Chassis montierten Einsatz, wobei der Einsatz zumindest ein Kabelmanagementelement (50) beinhaltet;
c) eine Vielzahl von Glasfaseradaptern (108), die betriebsfähig an dem Einsatz montiert sind;
d) das Gehäuse (200) nach einem der Ansprüche 1 bis 6, das an dem Einsatz montiert ist;
e) ein Telekommunikationsstammkabel (300), beinhaltend eine Vielzahl von Glasfaserkabeln (302), die durch einen Außenmantel gehalten werden, wobei sich ein Endsegment des Telekommunikationskabels in den Einsatz und das Gehäuse erstreckt, wobei Glasfaserkabel des Stammkabels innerhalb des Gehäuses an der ersten Kabelhaltestruktur (210) befestigt sind, wobei lose Glasfasern (306) der Glasfaserkabel mit einem Übermantel versehen und an der zweiten Haltestruktur (212) befestigt sind, wobei zumindest einige der losen Glasfasern betriebsfähig mit der Vielzahl von Glasfaseradaptern verbunden sind.

8. Vorverkabelter Telekommunikationseinsatz nach Anspruch 7, wobei der erste Kabelaufbewahrungsbereich eine Spule ist, um die die Glasfasern und der Übermantel gewickelt sind.

9. Vorverkabelter Telekommunikationseinsatz nach Anspruch 7, ferner beinhaltend eine dritte Haltestruktur (220), die sich innerhalb des Kabelmanagementgehäuses befindet, wobei die dritte Haltestruktur zum Halten eines oder mehrerer der Vielzahl von Glasfaserkabeln während eines Reparaturvorgangs dient.

10. Vorverkabelter Telekommunikationseinsatz nach Anspruch 7, wobei das Kabelmanagementgehäuse aus einem Polymermaterial gebildet ist.

11. Vorverkabelter Telekommunikationseinsatz nach Anspruch 7, wobei das Kabelmanagementgehäuse um eine Querachse symmetrisch ist.

12. Vorverkabelter Telekommunikationseinsatz nach Anspruch 1, wobei die erste Öffnung der zweiten Öffnung gegenüberliegt.

## Revendications

1. Panier (200) pour un plateau de télécommunications, le panier comprenant :
a) une paroi de fond (202) ;
b) une paroi latérale (204) s'étendant à partir de la paroi de fond, la paroi latérale (204) et la paroi de fond (202) définissant un volume intérieur (200a), la paroi latérale (204) comprenant une première ouverture (204c) pour permettre aux fibres optiques de pénétrer dans le volume intérieur (200a) et une deuxième ouverture (204d) pour permettre aux fibres optiques de sortir du volume intérieur (200a) ;
c) une première structure de retenue de câbles (210) à proximité de la première ouverture (204c), la première structure de retenue de câbles étant destinée à retenir une pluralité de câbles à fibres optiques ayant un premier diamètre nominal ;
d) une deuxième structure de retenue de câbles (212) pour retenir la pluralité de câbles à fibres optiques logés dans une surtubulure, la surtubulure ayant un deuxième diamètre nominal supérieur au premier diamètre nominal ; et
e) une première zone de stockage de câbles (206) située à proximité de la deuxième ouverture ;
f) dans lequel la deuxième structure de retenue de câbles est située entre la première structure de retenue de câbles et la première zone de stockage de câbles.

2. Panier selon la revendication 1, comprenant en outre :
a) une deuxième zone de stockage de câbles (206) située à proximité de la première ouverture.

3. Panier selon la revendication 1 ou 2, dans lequel l'au moins une des première et deuxième zones de stockage est située entre les première et deuxième structures de retenue de câble.

4. Panier selon la revendication 1, comprenant en outre une troisième structure de retenue montée sur la paroi de fond, la troisième structure de retenue (220) étant destinée à retenir un ou plusieurs de la pluralité de câbles à fibres optiques pendant une opération de réparation.

5. Panier selon la revendication 1, dans lequel le panier est formé à partir d'un matériau polymère.

6. Panier selon la revendication 1, dans lequel le panier est symétrique autour d'un axe transversal.

7. Plateau de télécommunications précâblé comprenant :
a) un châssis (10) ;
b) un plateau monté pivotant (20) sur le châssis, le plateau comprenant au moins une caractéristique de gestion de câbles (50) ;
c) une pluralité d'adaptateurs à fibres optiques (108) montés de manière fonctionnelle sur le plateau ;
d) le panier (200) selon l'une quelconque des revendications 1 à 6 monté sur le plateau ;
e) un câble principal de télécommunications (300) comprenant une pluralité de câbles à fibres optiques (302) retenus par une gaine extérieure, dans lequel un segment d'extrémité du câble de télécommunications s'étend dans le plateau et le panier, dans lequel les câbles à fibres optiques du câble principal sont arrimés au sein du panier au niveau de la première structure de retenue de câbles (210), dans lequel les fibres optiques lâches (306) des câbles à fibres optiques sont munies d'une surtubulure et arrimées au niveau de la deuxième structure de retenue (212), dans lequel au moins certaines des fibres optiques lâches sont raccordées de manière fonctionnelle à la pluralité d'adaptateurs à fibres optiques.

8. Plateau de télécommunications précâblé selon la revendication 7, dans lequel la première zone de stockage de câbles est une bobine autour de laquelle les fibres optiques et la surtubulure sont enroulées.

9. Plateau de télécommunications précâblé selon la revendication 7, comprenant en outre une troisième structure de retenue (220) située au sein du panier de gestion de câbles, la troisième structure de retenue étant destinée à retenir un ou plusieurs de la pluralité de câbles à fibres optiques pendant une opération de réparation.

10. Plateau de télécommunications précâblé selon la revendication 7, dans lequel le panier de gestion de câbles est formé à partir d'un matériau polymère.

11. Plateau de télécommunications précâblé selon la revendication 7, dans lequel le panier de gestion de câbles est symétrique autour d'un axe transversal.

12. Plateau de télécommunications précâblé selon la revendication 1, dans lequel la première ouverture est opposée à la deuxième ouverture.
